# EUROPEAN PATENT SPECIFICATION

(11) **EP 2 966 827 B1**
(45) Date of publication and mention of the grant of the patent: **25.10.2017**
(21) Application number: 14306110.9
(22) Date of filing: 07.07.2014
(51) Int. Cl.: H04L 27/34, H04B 10/516

(54) **Method for digitally modulating a signal in a communication network**
Verfahren zur digitalen Modulation eines Signals in einem Kommunikationsnetzwerk
Procédé permettant de moduler numériquement un signal dans un réseau de communication

(43) Date of publication of application: 13.01.2016
(73) Proprietor: ALCATEL LUCENT, 92100 Boulogne-Billancourt (FR)
(72) Inventor: Razzetti, Luca, 20059 Vimercate (IT); Costantini, Carlo, 20059 Vimercate (IT); Gavioli, Giancarlo, 20059 Vimercate (IT); Pepe, Marianna, 20059 Vimercate (IT); Renaudier, Jeremie, 91620 Nozay (FR)

(56) References cited:
- MARTIN SJÖDIN ET AL: "Comparison of 128-SP-QAM with PM-16-QAM", OPTICS EXPRESS, vol. 20, no. 8, 9 April 2012 (2012-04-09), page 8356, XP055134850, ISSN: 1094-4087, DOI: 10.1364/OE.20.008356
- Tobias A Eriksson: "Multidimensional Modulation Formats for Coherent Optical Communication Systems", Thesis for the degree of Licentiate of Engineering, 31 March 2014 (2014-03-31), XP055137326, Retrieved from the Internet: URL:http://publications.lib.chalmers.se/re cords/fulltext/194643/194643.pdf [retrieved on 2014-08-29]
- LEONARDO COELHO ET AL: "Global Optimization of Fiber-Optic Communication Systems using Four-Dimensional Modulation Formats", 37TH EUROPEAN CONFERENCE AND EXPOSITION ON OPTICAL COMMUNICATIONS, 22 September 2011 (2011-09-22), page Mo.2.B.4, XP055137329, Washington, D.C. DOI: 10.1364/ECOC.2011.Mo.2.B.4 ISBN: 978-1-55-752931-2

## Description

### Technical field

The present invention relates to the field of communication networks, in particular, but not exclusively, optical communication networks. More particularly, the present invention relates to a method and an apparatus for digitally modulating a signal (in particular, but not exclusively, an optical signal) in a communication network.

### Background art

As known, digital data are transmitted over a communication channel (e.g. an optical channel) in the form of one or more signals (e.g. optical signals) with modulated amplitude and/or phase. For instance, in QPSK (Quadrature Phase Shift Keying) the phase of a signal is modulated, whereas in QAM (Quadrature Amplitude Modulation) schemes both amplitude and phase of a signal are modulated.

A modulation format typically has associated M modulation symbols, each symbols corresponding to a certain phase and/or amplitude. In the so-called two-dimensional (or 2D) modulation formats, the M modulation symbols may be represented in the form of a two-dimensional constellation, namely a set of M points in the complex plane (or I-Q plane). A constellation comprising M points (namely, M modulation symbols) allows encoding patterns of m=log₂(M) bits of the digital data to be transmitted.

Specifically, according to coherent encoding schemes, each constellation point (and hence each modulation symbol) is assigned to a respective label of m bits. Multilevel phase and amplitude modulation carried out at the transmitter side basically consists in mapping each pattern of m bits of the digital data to be transmitted into the modulation symbol whose label matches the m bits of the pattern.

On the other hand, coherent demodulation carried out at the receiver side basically consists in demapping the received modulation symbol into the corresponding label. More particularly, in case of optical signals, an intradyne digital coherent receiver is typically used, wherein the signal received from the optical channel is mixed with a local signal generated by a local laser source. The frequency of the local signal is typically not locked to the frequency of the received signal, the mismatch between the two frequencies being typically much smaller than the modulation symbol rate (i.e. the reciprocal of the time lapsing between reception of two consecutive modulation symbols). This gives raise to a residual phase and frequency error, which is typically estimated and compensated after A/D conversion by a suitable DSP (Digital Signal Processing) algorithm for carrier recovery and demodulation.

Mostly due to implementation constraints, currently used DSP algorithms are based on non data-aided (or blind) equalization and synchronization techniques. These algorithms are inherently incapable of estimating the absolute phase of the received signal, thereby making them inaccurate when the received signal is affected by a phase slip.

As known, a phase slip is a random rotation of the modulation constellation in the I-Q plane, introduced by transmission channels (in particular, optical channels). When a phase slip occurs, the constellation is rotated by an angle an integer multiple of the symmetry angle ϑ_{symm} of the constellation, and such rotation can not be detected by the DSP algorithm, which accordingly demaps the modulation symbols received following to the constellation rotation in an erroneous way.

In the present description and in the claims, the expression "2D constellation with N-fold rotational symmetry" or "2D constellation having a rotational symmetry of order N" will designate a 2D constellation whose shape does not change when it is rotated about the I-Q plane origin by any integer multiple of 360°/N. The angle 360°/N is also termed herein after "symmetry angle ϑ_{symm}".

In order to solve the phase slip issue, several measures are known, including differential encoding. Differential encoding provides for mapping at least part of the m-bit patterns of the digital data to be transmitted into phase differences, rather than into absolute values of the signal phase.

In particular, starting from a constellation having a rotational symmetry of order N, n=log₂(N) bits out of the m bits of each pattern are encoded differentially, meaning that they are mapped into N phase differences i·ϑ_{symm} (i=0, ... N-1). To this purpose, a differential label of n bits is assigned to each one of the N phase differences i·ϑ_{symm} (i=0, ... N-1). Further, according to the differential encoding technique, the remaining m-n bits of each m-bit pattern are encoded in a rotationally invariant fashion. To this purpose, a same rotationally invariant label of m-n bits is assigned to all the N constellation points which are obtained by rotating the same point by any integer multiple of the symmetry angle ϑ_{symm}.

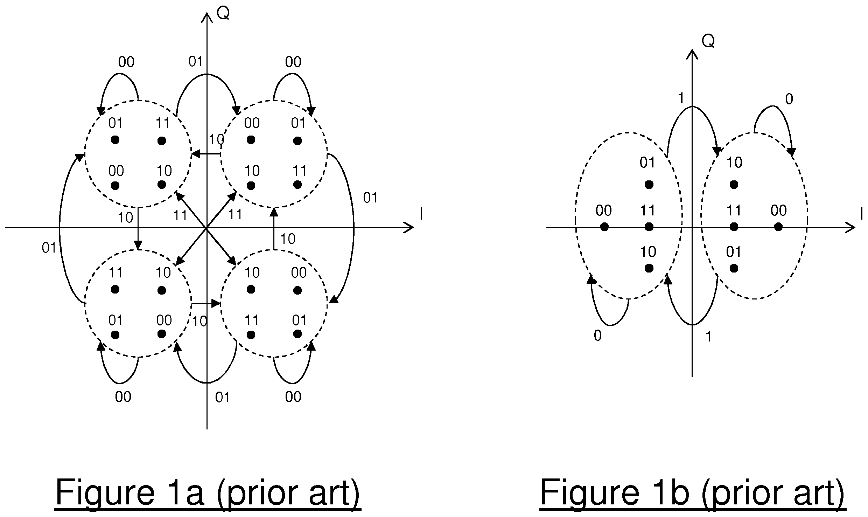

An exemplary differential encoding based on the known 16QAM modulation format will be described hereinafter, with reference to Figure 1 a. Figure 1 a shows a typical constellation of the 16QAM modulation format, which comprises M=16 points distributed within the four quadrants of the I-Q plane, meaning that patterns of m=log₂(M)=4 bits may be encoded. The order N of rotational symmetry is 4, and hence the symmetry angle ϑ_{symm} of the constellation is 360°/4=90°. The number of bits to be differentially encoded is accordingly n=log₂(N)=2. In Figure 1a, exemplary differential labels and their associated phase differences are shown in the form of a state machine. In the example, the differential label "00" is assigned to a phase difference of 0·ϑ_{symm}=0°, the differential label "01" is assigned to a phase difference of 1·ϑ_{symm}=90°, the differential label "11" is assigned to a phase difference of 2·ϑ_{symm}=180°, and the differential label "10" is assigned to a phase difference of 3·ϑ_{symm}=270°. Besides, the number of bits to be encoded in a rotationally invariant fashion is m-n=2. In Figure 1 a, exemplary rotationally invariant labels are shown. With reference for instance to the rotationally invariant label "00", it may be appreciated that it is associated to the four constellation points which are obtained by rotating the same point by 0°, 90°, 180° and 270°. The same applies also to the other values "01", "10" and "11".

A further exemplary differential encoding based on the known 8QAM modulation format will be described hereinafter, with reference to Figure 1 b. Figure 1b shows a typical constellation of the 8QAM modulation format, which comprises M=8 points distributed within the four quadrants of the I-Q plane, meaning that patterns of m=log₂(M)=3 bits may be encoded. The order N of rotational symmetry is 2, and hence the symmetry angle ϑ_{symm} of the constellation is 360°/2=180°. The number of bits to be differentially encoded is accordingly n=log₂(N)=1. In Figure 1b, exemplary differential labels and their associated phase differences are shown in the form of a state machine. In the example, the differential label "0" is assigned to a phase difference of 0·ϑ_{symm}=0°, while the differential label "1" is assigned to a phase difference of 1·ϑ_{symm}=180°. Besides, the number of bits to be encoded in a rotationally invariant fashion is m-n=2. In Figure 1b, exemplary rotationally invariant labels are shown. With reference for instance to the rotationally invariant label "01", it may be appreciated that it is associated to the two constellation points which are obtained by rotating the same point by 0° and 180°. The same applies also to the other values "00", "10" and "11 ".

As known, two 2D modulation formats may be independently applied to two separated signals transmitted over the same channel, in order to increase the channel bitrate up to 100 Gbps. For instance, in case of optical channels a PM-QPSK (Polarization Multiplexing QPSK) or PM-QAM (Polarization Multiplexing QAM) technique may be applied, which basically consists in transmitting over the channel two optical signals with different polarization states, each signal being separately modulated using either a QPSK or QAM modulation format.

4D modulation formats are also known, e.g. from M. Karlsson et al. "Four-Dimensional Optimized Constellations for Coherent Optical Transmission Systems", proc. ECOC2010, 19-23 Sept. 2010, Torino (Italy), paper We.8.C.3 and G. Ungerboeck "Channel Coding with Multilevel/Phase Signals", IEEE Transactions on Information Theory, Volume IT-28, Issue:1, Pages 55-67, January 1982.

A 4D modulation format may be represented as a 4D constellation of 4D symbols, each 4D symbol being formed by the combination of two 2D symbols of a certain 2D modulation format. The two 2D symbols can be either two time consecutive symbols, or two symbols on orthogonal polarizations. Exemplary modulation formats of this type are for instance SP-QPSK (Set Partitioning QPSK) and SP-QAM (Set Partitioning QAM). The 4D constellation is built using a set partitioning technique. In particular, starting from the two 2D constellations (each one comprising M constellation points), a set of M² possible 4D modulation symbols is provided, each 4D modulation symbol being formed by the combination of a first constellation point of the first 2D constellation and a second constellation point of the second 2D constellation. According to the set partitioning technique, the set of M² possible 4D modulation symbols is partitioned, namely it is divided into two or more subsets whose union is the original set and whose intersection is void. Then, only the 4D modulation symbols of a certain subset are selected for modulation. For instance, SP-QPSK is obtained starting from two QPSK constellations. As known, a QPSK constellation comprises M=4 constellation points, meaning that two QPSK constellations give raise to M²=16 possible 4D modulation symbols. According to the set partitioning technique, such set may be partitioned for selecting a subset of e.g. M'<M² 4D modulation symbols only.

The criterion for partitioning the set (and hence selecting the M'<M² 4D modulation symbols) may be for instance parity. In particular, provided each constellation point of the QPSK constellation has a respective label of m=log₂(M)=2 bits, a partitioning criterion may be selecting only the 4D modulation symbols formed by pairs of constellation points whose concatenated labels fulfil a parity criterion, namely the last bit is the parity of the first three bits. This criterion allows selecting M'=M²/2=8 4D modulation symbols, which allow mapping patterns of m'=log₂(M')=3 bits, followed by their parity bit.

In view of addressing the phase slip issue described above, from M. Sjödin et al. "Comparison of 128-SP-QAM with PM-16-QAM", Optics Express, Vol. 20, Issue 8, pages 8356-8366 it is known applying differential encoding also to 4D modulation formats.

In particular, for applying differential encoding to the above SP-QPSK modulation format, it has been proposed to, upon transmission of each pattern of m'=3 bits, add the parity bit so as to obtain a pattern of 4 bits, divide the pattern of 4 bits into two sub-patterns of m=2 bits each, and apply the above described differential encoding principles to each sub-pattern of m=2 bits separately.

### Summary of the invention

The inventors have noticed that the above known approach for applying differential encoding to 4D modulation formats such as SP-QPSK or SP-QAM exhibits some drawbacks.

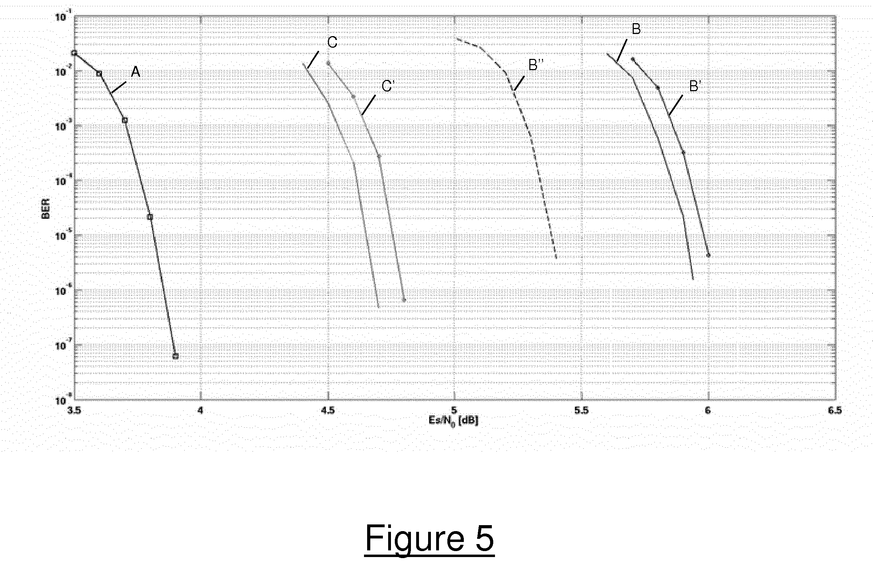

In particular, the inventors have demonstrated that the above known approach results in high receiver sensitivity penalties (more than 1 dB in case of SP-QPSK, as it will be described in further detail herein after with reference to Figure 5).

The inventors have realized that such penalty is due to the fact that, as known, differential encoding (even when applied to 2D modulation formats) inherently entails a receiver sensitivity penalty. Such penalty is mainly due to the fact that, using differential encoding, an error on the decision of one bit propagates to the adjacent bit. The higher the number of differentially encoded bits per symbol (in particular, the ratio n/m), the higher the penalty.

In the above described known approach for applying differential encoding to 4D modulation formats, the number of differentially encoded bits per symbol is typically high. The inventors have realized that this is due to the fact that, even if a 4D constellation was obtained from two 2D constellations using the set partitioning technique, differential encoding is actually carried out on each 2D constellation separately. In other words, differential encoding does not take advantage of the multidimensional nature of the constellation.

For instance, the typical constellation of the QPSK modulation format has M=4 points (one point per each quadrant), an order of rotational symmetry N=4, and hence a symmetry angle ϑ_{symm}=360°/N=90°. Hence, by applying the differential encoding technique to each 2D QPSK constellation separately as described above, in each sub-pattern of m=2 bits the number of bits per symbol that shall be differentially encoded is n=log₂(N)=2, meaning that both the m=2 bits of each sub-pattern are differentially encoded. In other words, all the bits of each symbol are differentially encoded.

As a further example, the typical constellation of the 16QAM modulation format has M=16 points, an order of rotational symmetry N=4, and hence a symmetry angle ϑ_{symm}=360°/N=90°. Hence, by applying the differential encoding technique to each 2D 16QAM constellation as described above, in each sub-pattern of m=4 bits the number of bits per symbol that shall be differentially encoded is n=log₂(4)=2, meaning that two of the m=4 bits of each sub-pattern are differentially encoded. In other words, half bits of each symbol are differentially encoded.

In view of the above, it is an object of the present invention to provide a method and apparatus for digitally modulating a signal in a communication network (in particular, but not exclusively, an optical communication network) which overcomes the aforesaid drawback.

In particular, it is an object of the present invention to provide a method and apparatus for digitally modulating a signal in a communication network which allows applying differential encoding to a multidimensional (e.g. a 4D) modulation format in an efficient way, in particular by minimizing the number of differentially encoded bits so as to minimize the penalties introduced by differential encoding.

According to the present invention, a multidimensional constellation (e.g. a 4D constellation) is generated starting from two 2D constellations with N-fold rotational symmetry. The 4D constellation is formed by M' 4D modulation symbols, which are selected so that each 4D modulation symbol, when rotated by any integer multiple of 360°/N, results in a further 4D modulation symbol of the 4D constellation. The 4D constellation is then used for encoding patterns of m'=log2(M') bits into respective 4D modulation symbols. In particular, in each pattern, n=log2(N) bits are differentially encoded, while the remaining m'-n bits are encoded in a rotationally invariant fashion. This allows reducing the number of differentially encoded bits per symbol, thereby reducing the penalty inherent to use of differential encoding.

According to a first aspect, the present invention provides a method for digitally modulating a signal in a communication network according to independent claim 1.

Preferably, the number M' is a power of 2.

Preferably, step a) comprises identifying a sub-set SM formed by the number M' of multidimensional modulation symbols by applying a set partitioning technique to a set of all possible multidimensional modulation symbols obtainable by combining two-dimensional modulation symbols of the at least two two-dimensional constellations.

According to a preferred variant, the set partitioning technique comprises:
a1) identifying a multidimensional modulation symbol from the set of all possible multidimensional modulation symbols;
a2) rotating the identified multidimensional modulation symbol by N integer multiples of 360°/N, th integer multiples being i·360°/N, i=0, ... N-1, thereby selecting N multidimensional modulation symbols of the sub-set (SM); and
a3) iterating steps a1) and a2) until M' multidimensional modulation symbols are selected.

According to a preferred variant, step a) further comprises dividing the sub-set SM of M' selected multidimensional modulation symbols into N non-overlapping groups Si (i=0, ... N-1).

Preferably, dividing the sub-set SM comprises inserting each one of the N multidimensional modulation symbols selected at step a2 into a respective one of the N non-overlapping groups Si (i=0, ... N-1).

Preferably, step a) comprises assigning differential labels of n bits to transitions between the N non-overlapping groups Si (i=0, ... N-1), the differential labels allowing to differentially encode n bits of each pattern of m' bits.

Preferably, step a) comprises assigning a same rotationally invariant label of m'-n bits to the N multidimensional modulation symbols obtained at step a2) from rotation of the identified multidimensional modulation symbol, the rotationally invariant label allowing to encode the remaining m'-n bits of each pattern of m' bits in a rotationally invariant fashion.

Preferably, differentially encoding the n bits comprises mapping the n bits into a transition between the N non-overlapping groups Si (i=0, ... N-1) whose assigned differential label matches the n bits and, based also on a knowledge of the group (Si) used for mapping the preceding pattern of m' bits, determining, amongst the N non-overlapping groups Si (i=0, ... N-1), a group Si* that shall be used for mapping the remaining m'-n bits in a rotationally invariant fashion.

Preferably, encoding the remaining m'-n bits in a rotationally invariant fashion comprises mapping the remaining m'-n bits into the multidimensional modulation symbol of the determined group Si*, whose assigned rotationally invariant label matches the remaining m'-n bits.

Preferably, step b) comprises applying to at least one analog signal a phase and/or an amplitude associated with the multidimensional modulation symbol whose assigned rotationally invariant label matches the remaining m'-n bits.

According to a second aspect, the present invention provides a transmitter for a digital communication network according to independent claim 12.

According to a third aspect, the present invention provides a communication network comprising a transmitter as set forth above.

### Brief description of the drawings

The present invention will become clearer by reading the following detailed description, given by way of example and not of limitation, to be read by referring to the accompanying drawings, wherein:
- Figures 1a and 1b (described above) show the known principles of differential encoding applied to a 16QAM constellation and a 8QAM constellation, respectively (constellation points are not represented on scale in this figures);
- Figure 2 is a flow chart of the method for digitally modulating a signal in a communication network, according to embodiments of the present invention;
- Figures 3a, 3b and 3c illustrate the method of the invention in the exemplary case of SP-QPSK;
- Figures 4a, 4b and 4c illustrate the method of the invention in the exemplary case of SP-8QAM;
- Figure 5 shows results in terms of BER vs Es/N₀ of comparative simulations carried out by the inventors for SP-QPSK; and
- Figure 6 schematically shows a transmitter and a receiver configured to implement the method according to embodiments of the present invention.

### Detailed description of preferred embodiments of the invention

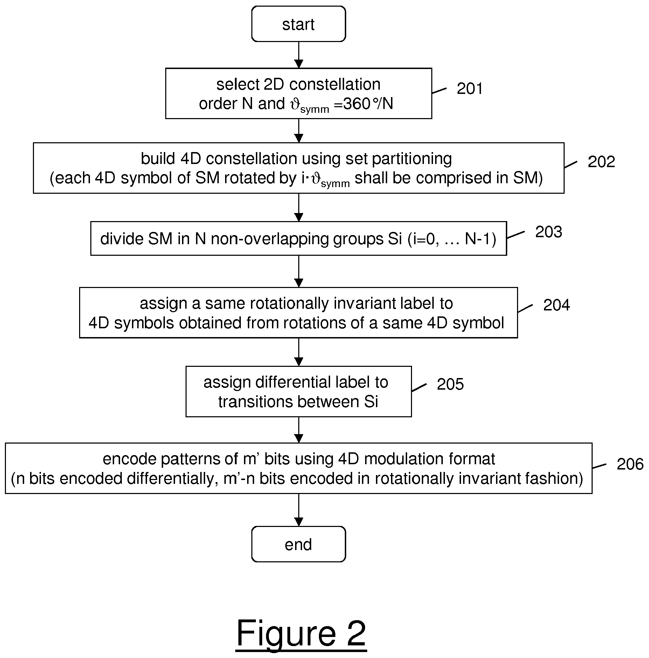

Figure 2 is a flow chart of the method for digitally modulating a signal in a communication network, according to embodiments of the present invention.

A first step 201 of the method comprises selecting a 2D modulation constellation, namely a constellation which may be represented as a set of M points within the complex plane or I-Q plane. For instance, the constellation of the QPSK modulation format, the constellation of the 16QAM modulation format schematically shown in Figure 1a, or the constellation of the 8QAM modulation format schematically shown in Figure 1b may be used. The 2D constellation comprises M points in the I-Q plane, has an order of rotational symmetry N and hence a symmetry angle ϑ_{symm}=360°/N.

Then, starting from the selected 2D constellation, a 4D constellation is built by applying a set partitioning technique (step 202). To this purpose, the 2D constellation is duplicated and the two 2D constellations are merged, thereby providing M² possible 4D modulation symbols. Each 4D modulation symbol is formed by a pair of constellation points, namely a first constellation point of the first 2D constellation and a second point of the second (duplicated) 2D constellation. Hence, each 4D modulation symbol may be represented as a pair of constellation points in two different I-Q planes. Each constellation point has its own phase (and its own amplitude, in case of QAM).

Preferably, the set partitioning is carried out so as to select one subset SM comprising M'<M² 4D symbols from the original set of M² 4D modulation symbols, wherein M' is a power of 2. According to the present invention, the set partitioning is carried out so that any 4D modulation symbol of the selected subset SM, when rotated by any integer multiple of the symmetry angle ϑ_{symm} of the original 2D constellation, results in a further 4D modulation symbol of the subset SM.

For instance, in order to build the subset SM, the following procedure may be applied. Amongst the M² possible 4D modulation symbols, a certain 4D modulation symbol is firstly selected. Such 4D modulation symbol is then rotated by all the N integer multiples of the symmetry angle i·ϑ_{symm} (i=0, ... N-1). Such N rotations provide N 4D modulation symbols of the subset SM. Rotation of a 4D modulation symbol by the angle i·ϑ_{symm} basically consists in rotating each constellation point forming the 4D modulation symbol by the angle i·ϑ_{symm} within its own I-Q plane. This way, N 4D modulation symbols of the subset SM are determined. Further N 4D modulation symbols of the subset SM may be determined using the same procedure, namely by selecting a further 4D modulation symbol (which is different from the already determined ones) and by rotating it by the N integer multiples of the symmetry angle i·ϑ_{symm} (i=0, ... N-1). The procedure is iterated until M' 4D modulation symbols are selected. Hence, M' is an integer multiple of N. M' may be for instance equal to M²/2.

Hence, the M' selected 4D modulation symbols allow to map patterns of m'=log₂(M') bits. According to the present invention, n=log₂(N) bits of each pattern of m' bits are encoded differentially, while the remaining m'-n bits of each pattern are encoded in a rotationally invariant fashion.

In order to implement this type of differential encoding, the M' 4D selected modulation symbols of the subset SM are preferably divided into N non-overlapping groups Si (i=0, ... N-1) (step 203). In particular, each one of the N 4D modulation symbols obtained at step 202 from N rotations of a same 4D modulation symbol as described above is preferably inserted into a respective one of the N non-overlapping groups Si. More specifically, the 4D modulation symbol obtained from rotation by the angle i·ϑ_{symm} is preferably inserted into group Si. Hence, N non-overlapping groups are obtained, each group comprising M'/N 4D modulation symbols.

Then, all the N 4D modulation symbols obtained at step 202 from N rotations of a same 4D modulation symbol are preferably assigned to a same rotationally invariant label of m'-n bits (step 204). Such rotationally invariant label allows encoding m'-n bits of each m'-bit pattern to be transmitted in a rotationally invariant fashion, as it will be described in detail herein after.

Then, differential labels of n bits are preferably assigned to transitions between the various groups Si generated at step 203 (step 205). It may be appreciated that the transitions between the groups Si basically correspond to phase differences whose values are the integer multiples of the symmetry angle i·ϑ_{symm} (i=0, ... N-1). Such differential label allows encoding n bits of each m'-bit pattern to be transmitted in a differential fashion, as it will be described in detail herein after.

Upon completion of step 205, the 4D modulation format with differential encoding is defined and ready to be applied to digital data to be transmitted.

In particular, the 4D modulation format is applied for encoding patterns of m' bits of the digital data to be transmitted (step 206). Specifically, for each pattern of m' bits to be transmitted, n bits of the pattern (e.g. the most significant ones) are encoded differentially, meaning that they are mapped into the transition between groups Si whose differential label matches the n bits to be transmitted. Starting from the identified transition and from the knowledge of the group Si of 4D symbols used for mapping the preceding pattern, this allows determining, amongst the N groups Si (i=0, ... N-1), the group Si* of 4D symbols which shall be used for mapping the subsequent m'-n bits of the pattern. The other m'-n bits of the pattern (e.g. the least significant ones) are then mapped into the 4D modulation symbol of the selected group Si* whose rotationally invariant label matches the m'-n bits to be transmitted. This way, each pattern of m' bits is mapped into a respective 4D symbol. The phases and amplitudes associated to the two constellation points forming the 4D symbol are then applied to one or more analog signals to be transmitted over the physical channel. For instance, the phases and amplitudes of the two constellation points may be applied e.g. to two optical signals having different polarization states, or to the same signal but at different (consecutive) timeslots.

The inventors have estimated that a significant reduction of the number of differentially encoded bits is advantageously achieved, in comparison to the above described known approach for applying differential encoding to a 4D modulation format.

As described above, according to the known approach differential encoding is separately applied to each 2D symbol composing a 4D symbol. Hence, if the 4D modulation format is obtained starting from a 2D constellation with an order of rotational symmetry equal to N, 2n bits out of each 4D symbol are differentially encoded. The number n of differentially encoded bits per 2D symbol is therefore the same as in a 2D modulation format. No advantage is taken from the fact of using a 4D constellation.

According to the present invention, instead, n bits out of each 4D symbol are differentially encoded. The number of differentially encoded bits per 2D symbol is therefore n/2.

Hence, a corresponding reduction of the penalties entailed by differential encoding is accordingly achieved, as it will be described in detail herein after with reference to Figure 5.

Steps 201-205 of the flow chart of Figure 2 will be now described in detail with reference e.g. to the exemplary case of SP-QPSK.

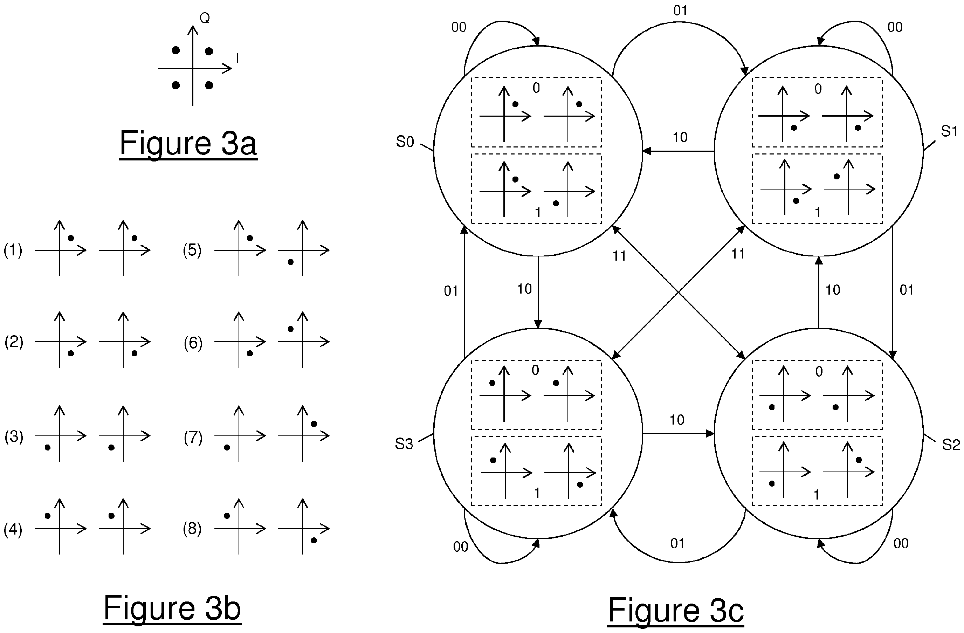

At step 201, the 2D constellation of QPSK is selected, which is shown in Figure 3a. The QPSK constellation comprises M=4 points in the I-Q plane and has an order of rotational symmetry N=4. Hence, the symmetry angle is ϑ_{symm}=360°/N=90°.

Then, starting from such constellation, at step 202 a 4D constellation comprising e.g. M'=M²/2=8 4D modulation symbols is built by applying a set partitioning technique as described above. In particular, the subset SM is built by selecting a first 4D modulation symbol (see Figure 3b(1)) and by rotating it by the N=4 integer multiples of the symmetry angle i·ϑ_{symm} = i·90° (i=0, 1, 2, 3). This way, N=4 4D modulation symbols of the subset SM are determined, which are shown in Figure 3b(1) (rotation by 0·90°), Figure 3b(2) (rotation by 1·90°), Figure 3b(3) (rotation by 2·90°) and Figure 3b(4) (rotation by 3·90°). Then, a second 4D modulation symbol (see Figure 3b(5)) is selected, which is different from the already selected ones, and is rotated by the N=4 integer multiples of the symmetry angle i·ϑ_{symm} = i·90° (i=0, 1, 2, 3). This way, N=4 4D further modulation symbols of the subset SM are determined, which are shown in Figure 3b(5) (rotation by 0·90°), Figure 3b(6) (rotation by 1·90°), Figure 3b(7) (rotation by 2·90°) and Figure 3b(8) (rotation by 3·90°). It may be appreciated that the M'=8 4D symbols obtained as described above meet the set partition criterion by which any 4D modulation symbol of the selected subset SM, when rotated by any integer multiple of the symmetry angle ϑ_{symm} of the original 2D constellation, results in a further 4D modulation symbol of the subset SM.

Hence, the M'=8 selected 4D modulation symbols allow to map patterns of m'=log₂(M')=3 bits into each 4D symbol. According to the present invention, n=log₂(N)=2 bits of each pattern of m'=3 bits are encoded differentially, while the remaining m'-n=1 bits of each pattern are encoded in a rotationally invariant fashion.

In order to implement this type of differential encoding, at step 203 the M'=8 4D selected modulation symbols of the subset SM are divided into N=4 non-overlapping groups S0, S1, S2, S3, which are shown in Figure 3c. In particular, the N=4 4D symbols obtained from rotations of a same symbol are placed in different groups.

Then, at step 204 a same rotationally invariant label of m'-n=1 bits is assigned to all the N=4 4D modulation symbols obtained at step 202 from rotations of a same 4D modulation symbol. In Figure 3c, by way of non limiting example, the rotationally invariant label "0" is assigned to the N=4 4D symbols shown in Figures 3b(1)-3b(4), while the rotationally invariant label "1" is assigned to the N=4 4D symbols shown in Figures 3b(5)-3b(8).

Then, at step 205, differential labels of n=2 bits are assigned to transitions between the groups S0, S1, S2, S3. In Figure 3c, by way of non limiting example the differential label "00" is assigned to no transition (phase difference of 0°), the differential label "01" is assigned to single clockwise transitions (phase difference of 90°), the differential label "11" is assigned to double transitions (phase difference of 180°), while the differential label "10" is assigned to single counterclockwise transitions (phase difference of 270°).

Hence, while application of differential decoding to SP-QPSK according to the known approach described above would lead to encode all the bits differentially, according to the present invention n=2 bits out of m'=3 bits are encoded differentially.

This entails a significant penalty reduction in comparison to the known approach for applying differential decoding to SP-QPSK, as shown in Figure 5.

Figure 5 shows the results in terms of BER (bit error rate) vs Es/N₀ (energy per symbol Es to noise power spectral density N₀ ratio) of comparative simulations carried out by the inventors for SP-QPSK, in presence of FEC decoding.

Curve A shows BER vs Es/N₀ for coherent SP-QPSK, while curve B shows BER vs Es/N₀ for differential SP-QPSK obtained by applying the known approach described above. It may be appreciated that differential SP-QPSK exhibits a penalty much larger than 1 dB relative to coherent SP-QPSK. As discussed above, penalty is inherent to use of differential encoding, and its significant value in this case is mainly due to the fact that the number of differentially encoded bits is chosen in the 2D space (each constellation separately). Curve B' shows BER vs Es/N₀ for differential SP-QPSK obtained by applying the known approach, when the channel exhibits a phase slip probability of 1e⁻³. Phase slip induces a further penalty increase, since additional errors occur when the phase slip takes place.

In order to decorrelate errors introduced by differential encoding, it is known using interleavers between set partitioning and differential encoding. Though interleavers partially mitigate the detrimental effects of differential encoding (see curve B" in Figure 5), the penalty is still very high with the known approach.

Curve C shows BER vs Es/N₀ for SP-QPSK with differential encoding according to the present invention. It may be noticed that, though a penalty over the coherent case is still present, such penalty is much smaller than in the known differential case. In particular, the penalty is less than 1 dB. This, as widely discussed above, is due to the fact that, taking advantage of using a 4D constellation obtained via set partitioning, the number of differentially encoded bits is significantly reduced. Curve C' shows BER vs Es/N₀ for SP-QPSK with differential encoding according to the present invention, when the channel exhibits a phase slip probability of 1e⁻³. Though phase slip slightly increases the penalty, the penalty is still much smaller than the one provided by the known approach.

Steps 201-205 of the flow chart of Figure 2 will be now further described with reference e.g. to the exemplary case of SP-8QAM.

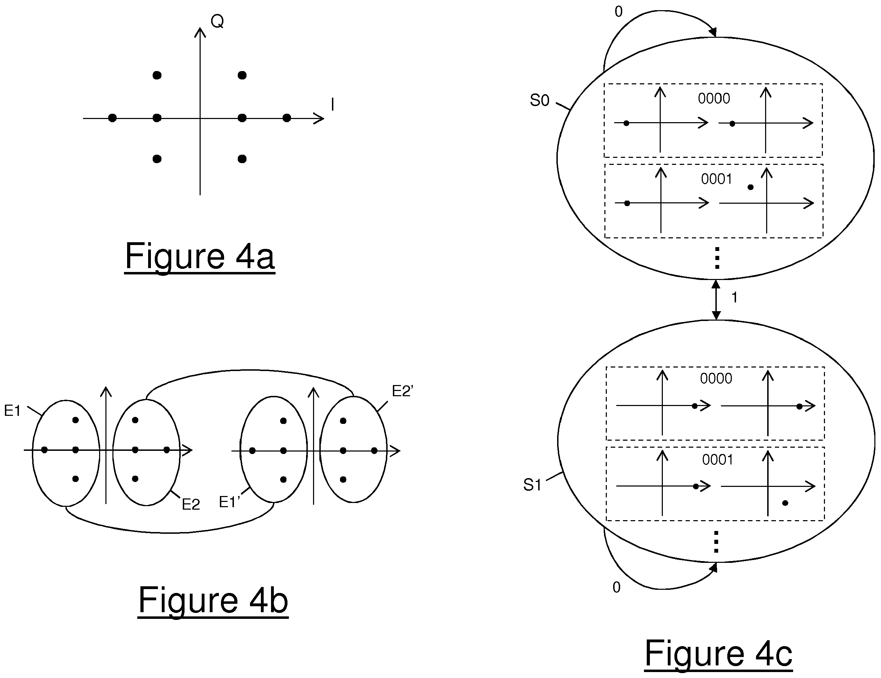

At step 201, a 2D constellation of 8QAM is selected, which is shown in Figure 4a. The 8QAM constellation comprises M=8 points in the I-Q plane and has an order to rotational symmetry N=2. Hence, its symmetry angle is ϑ_{symm}=360°/2=180°.

Then, starting from such constellation, at step 202 a 4D constellation comprising e.g. M'=M²/2=32 4D modulation symbols is built by applying a set partitioning technique as described above. In particular, with reference to Figure 4b, the subset SM is formed by the 16 4D modulation symbols obtained by combining anyone of the points in the first I-Q plane encircled by the ellipse E1 with anyone of the points in the second I-Q plane encircled by the ellipse E1', and by the 16 4D modulation symbols obtained by combining anyone of the points encircled by the ellipse E2 in the first I-Q plane with anyone of the points encircled by the ellipse E2' in the second I-Q plane. It may be appreciated that the M'=32 4D symbols obtained as described above meet the set partition criterion by which any 4D modulation symbol of the selected subset SM, when rotated by any integer multiple of the symmetry angle ϑ_{symm}=180° of the original 2D constellation, results in a further 4D modulation symbol of the subset SM.

Hence, the M'=32 selected 4D modulation symbols allow to map patterns of m'=log₂(M')=5 bits into a 4D symbol. According to the present invention, n=log₂(N)=1, namely a single bit for each pattern of m'=5 bits is encoded differentially, while the remaining m'-n=4 bits of each pattern are encoded in a rotationally invariant fashion.

In order to implement this type of differential encoding, at step 203 the M'=32 4D selected modulation symbols of the subset SM are divided into N=2 non-overlapping groups S0, S1 which are partially shown in Figure 4c. For not overloading the drawing, only two 4D symbols of each group S0, S1 are shown. It shall be noticed that group S1 is formed by the sixteen 4D symbols obtained from rotation by 180° of the sixteen 4D symbols forming the group S0.

Then, at step 204 a same rotationally invariant label of m'-n=4 bit is assigned to both the modulation symbols obtained from rotations of a same 4D modulation symbol. In Figure 4c, by way of non limiting example, the rotational invariant labels "0000" and "0001" are assigned to the two 4D symbols of each group S0, S1 shown in the drawing.

Then, at step 205, differential labels of n=1 bit are assigned to transitions between the groups S0, S1. In Figure 4c, by way of non limiting example the differential label "0" is assigned to no transition (phase difference of 0°), and the differential label "1" is assigned to the transition S0→S1 and vice versa (phase difference of 180°).

Hence, while application of differential encoding to SP-8QAM according to the known approach described above would lead to encode differentially n=log₂(N)=1 bit of each sub-pattern of m=3 bits to be encoded, according to the present invention a single bit of each pattern of m'=5 bits is encoded differentially. Also in this case, therefore, the ratio between number of differentially encoded bits and number of bits of the pattern is reduced, which entails a significant penalty reduction.

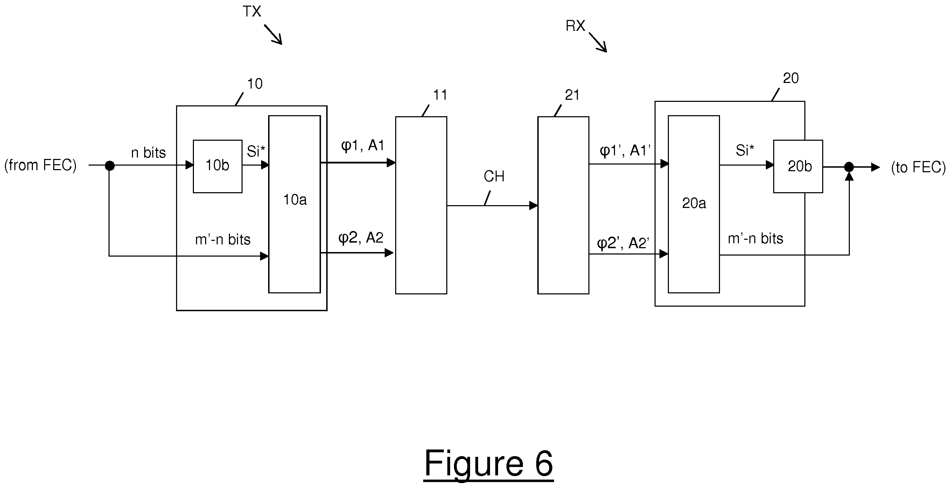

Figure 6 shows a transmitter and a receiver configured to implement the method according to embodiments of the present invention.

The transmitter TX preferably comprises a differentially encoded 4D mapping block 10 and a modulator 11 cascaded thereto. The block 10 preferably comprises a bit-symbol 4D mapper 10a having two inputs. One of the two inputs of the mapper 10a is preferably provided with a differential encoder 10b. The transmitter TX preferably also comprises a FEC coder (not shown in Figure 6 for simplicity) connected at the input of the mapping block 10.

The receiver RX preferably comprises a demodulator 21 and a differentially decoded 4D demapping block 20 cascaded thereto. The block 20 preferably comprises a symbol-bit 4D demapper 20a having two outputs. One of the two outputs of the demapper 20a is preferably provided with a differential decoder 20b. The receiver RX preferably also comprises a FEC decoder (not shown in Figure 6 for simplicity) connected at the output of the demapping block 20.

The operation of the transmitter TX and receiver RX will be now described.

At the transmitter TX, the differentially encoded 4D mapping block 10 preferably receives the digital data to be transmitted. The digital data may be FEC coded by the FEC coder, which adds redundancy bits for error detection and correction purposes. Then, the mapping block 10 divides the bitstream of the (FEC coded) digital data in patterns of m' bits, and maps each m'-bit pattern into a respective 4D modulation symbol as described above. In particular, each m'-bit pattern is divided in two parts: n bits are sent to the mapper 10a via the differential encoder 10b, whereas m'-n bits are directly sent to the mapper 10a. The differential encoder 10b preferably maps the received n bits into the transition between groups Si whose differential label matches the n bits to be transmitted. This, together with the knowledge of the group Si of 4D symbols used to map the previous pattern of m' bits, basically allows determining, amongst the N groups Si (i=0, ... N-1), the group Si* of 4D symbols which shall be used for mapping the subsequent m'-n bits of the pattern. The mapper 10a then receives an indication of the group Si* from the differential encoder 10b, and the m'-n least significant bit. The mapper 10a then preferably maps the received m'-n bits of the pattern into the 4D modulation symbol of the selected group Si* whose rotationally invariant label matches the m'-n bits to be transmitted. This way, the mapping block 10 maps each pattern of m' bits into a respective 4D symbol, having associated a first phase ϕ1 (and a first amplitude A1, in case of QAM) and a second phase ϕ2 (and a second amplitude A2, in case of QAM). The mapper 10a then preferably provides the two phases (and amplitudes) associated to the selected 4D symbol to the modulator 11, which applies them to one or more analog signal transmitted via the channel CH. The two phases (and amplitudes) may be applied e.g. to two optical signals with different polarization states, or to a same optical signal during consecutive timeslots.

At the receiver RX, the demodulator 21 detects phases (and amplitudes, in case of QAM) of the received signal(s), thereby reconstructing a received 4D modulation symbol. The demapper 20a demaps the received 4D modulation symbol into a corresponding pattern of m' bits. In particular, for hard-decision de-mapping the circuit takes a decision on the symbol being transmitted and the associated bits. In case of soft-decision de-mapping, LLR are computed for each bit. This way, the pattern of m' bits is reconstructed, and may be optionally FEC decoded for error detection/correction purposes.

It shall be noticed that, although the above detailed description is referred to 4D constellations and 4D modulations formats, the principles of the present invention may be applied to any multidimensional modulation format, even with more than 4 dimensions. For instance, a 6D constellation may be built from 3 2D constellations of M points each. In this case, set partitioning allows selecting a subset SM of M' 6D modulation symbols amongst the M³ possible ones. Each modulation symbol is formed by a tern of points represented in respective I-Q planes and having respective phases and/or amplitudes. The set partitioning criterion is preferably the same described above, namely each 6D symbols of the subset SM, when rotated by any integer multiple of the symmetry angle of the original 2D constellation, shall still belong to the subset SM. Similarly to the 4D case, this allows reducing the number of differentially encoded bits to n=log₂(N) bits of m'=log₂(M') bits to be encoded. It shall be noticed that the number n of bits to be differentially encoded depends only on the rotational symmetry order of the original 2D constellation, while it is independent of the number of dimensions of the resulting multidimensional constellation. The advantages in terms of penalty reduction are the same as described above.

## Claims

1. A method for digitally modulating a signal in a communication network, said method comprising:
a) generating a multidimensional constellation starting from at least two two-dimensional constellations with N-fold rotational symmetry, said multidimensional constellation being formed by a number M' of multidimensional modulation symbols, wherein each multidimensional modulation symbol of said multidimensional constellation, when rotated by any integer multiple of 360°/N, results in a further multidimensional modulation symbol of said multidimensional constellation; and
b) encoding patterns of m'=log₂(M') bits of digital data to be transmitted in said multidimensional modulation symbols of said multidimensional constellation,
**characterized in that** said encoding comprises:
• differentially encoding n=log₂(N) bits out of said m' bits of each pattern, such that the number of differentially encoded bits per two-dimensional symbol is n/2, and
• encoding remaining m'-n bits out of said m' bits of each pattern, such that the same rotationally invariant label of m'-n bits is assigned to all multidimensional modulation symbols obtained by rotating a same multidimensional modulation symbol by any integer multiple of 360°/N.

2. The method according to claim 1, wherein said number M' is a power of 2.

3. The method according to any of the preceding claims, wherein said step a) comprises identifying a sub-set, SM, formed by said number M' of multidimensional modulation symbols by applying a set partitioning technique to a set of all possible multidimensional modulation symbols obtainable by combining two-dimensional modulation symbols of said at least two two-dimensional constellations.

4. The method according to claim 3, wherein said set partitioning technique comprises:
a1) identifying a multidimensional modulation symbol from said set of all possible multidimensional modulation symbols;
a2) rotating said identified multidimensional modulation symbol by N integer multiples of 360°/N, said integer multiples being i·360°/N, i=0, ... N-1, thereby selecting N multidimensional modulation symbols of said sub-set, SM; and
a3) iterating said steps a1) and a2) until M' multidimensional modulation symbols are selected.

5. The method according to claim 4, wherein said step a) further comprises dividing said sub-set, SM, of M' selected multidimensional modulation symbols into N non-overlapping groups, Si, i=0, ... N-1.

6. The method according to claim 5, wherein said dividing comprises inserting each one of said N multidimensional modulation symbols selected at step a2) into a respective one of said N non-overlapping groups, Si, i=0, ... N-1.

7. The method according to claim 5 or 6, wherein said step a) comprises assigning differential labels of n bits to transitions between said N non-overlapping groups, Si, i=0, ... N-1, said differential labels allowing to differentially encode n bits of each pattern of m' bits.

8. The method according to any of claims 4 to 7, wherein said step a) comprises assigning a same rotationally invariant label of m'-n bits to said N multidimensional modulation symbols obtained at step a2) from rotation of said identified multidimensional modulation symbol, said rotationally invariant label allowing to encode said remaining m'-n bits of each pattern of m' bits in a rotationally invariant fashion.

9. The method according to claim 7, wherein said differentially encoding said n bits comprises mapping said n bits into a transition between said N non-overlapping groups, Si, i=0, ... N-1, whose assigned differential label matches said n bits and, based also on a knowledge of the group, Si, used for mapping the preceding pattern of m' bits, determining, amongst said N non-overlapping groups, Si, i=0, ... N-1, a group, Si*, that shall be used for mapping said remaining m'-n bits in a rotationally invariant fashion.

10. The method according to claim 8 and 9, wherein said encoding said remaining m'-n bits in a rotationally invariant fashion comprises mapping said remaining m'-n bits into the multidimensional modulation symbol of said determined group, Si*, whose assigned rotationally invariant label matches said remaining m'-n bits.

11. The method according to claim 10, wherein said step b) comprises applying to at least one analog signal a phase and/or an amplitude associated with said multidimensional modulation symbol whose assigned rotationally invariant label matches said remaining m'-n bits.

12. A transmitter (TX) for a digital communication network,
wherein said transmitter (TX) is configured to encode patterns of m' bits of digital data to be transmitted in multidimensional modulation symbols of a multidimensional constellation,
wherein said multidimensional constellation is generated starting from at least two two-dimensional constellations having an N-fold rotational symmetry, said multidimensional constellation being formed by a number M'=2^{m'} of multidimensional modulation symbols, wherein each multidimensional modulation symbol of said multidimensional constellation, when rotated by any integer multiple of 360°/N, results in a further multidimensional modulation symbol of said multidimensional constellation, and
wherein said transmitter (TX) is configured to:
• encode differentially n=log₂(N) bits out of said m' bits of each pattern, such that the number of differentially encoded bits per two-dimensional symbol is n/2, and
• encode remaining m'-n bits out of said m' bits of each pattern, such that the same rotationally invariant label of m'-n bits is assigned to all multidimensional modulation symbols obtained by rotating a same multidimensional modulation symbol by any integer multiple of 360°/N.

13. A communication network comprising a transmitter according to claim 12.

## Patentansprüche

1. Verfahren zum digitalen Modulieren eines Signals in einem Kommunikationsnetzwerk, wobei besagtes Verfahren umfasst:
a) Erzeugen einer mehrdimensionalen Konstellation, beginnend mit mindestens zwei zweidimensionalen Konstellationen mit n-facher Rotationssymmetrie, wobei besagte mehrdimensionale Konstellation gebildet wird durch eine Anzahl M' von mehrdimensionalen Modulationssymbolen, wobei jedes mehrdimensionale Modulationssymbol von besagter mehrdimensionaler Konstellation beim Drehen um ein beliebiges ganzzahliges Vielfaches von 360°/N zu einem weiteren mehrdimensionalen Modulationssymbol von besagter mehrdimensionaler Konstellation führt; und
b) Codiermuster von m'=log₂(M') Bits digitaler Daten, die in besagten mehrdimensionalen Modulationssymbolen von besagter mehrdimensionaler Konstellation übertragen werden müssen,
**dadurch gekennzeichnet, dass** besagte Kodierung umfasst:
• differentielle Codierung von n=log₂(N) Bits aus besagten m' Bits von jedem Muster, sodass die Anzahl von differentiell codierten Bits pro zweidimensionalem Symbol n/2 ist, und
• Codieren der restlichen m'-n Bits aus besagten m' Bits von jedem Muster, sodass dasselbe rotatorisch invariante Etikett von m'- n Bits allen mehrdimensionalen Modulationssymbolen zugewiesen wird, die erhalten werden durch Rotation eines selben mehrdimensionalen Modulationssymbols durch ein beliebiges Vielfaches von 360°/N.

2. Verfahren nach Anspruch 1, wobei besagte Anzahl M' eine Potenz von 2 ist.

3. Verfahren nach einem beliebigen der vorhergehenden Ansprüche, wobei besagter Schritt a) umfasst das Identifizieren eines Untersatzes, SM, gebildet aus besagter Anzahl M' von mehrdimensionalen Modulationssymbolen durch Anwenden einer Satzpartitionstechnik auf einen Satz aller möglichen mehrdimensionalen Modulationssymbole, die erhaltbar sind durch Kombinieren zweidimensionaler Modulationssymbole von besagten mindestens zwei zweidimensionalen Konstellationen.

4. Verfahren nach Anspruch 3, wobei besagte Satzpartitionstechnik umfasst:
a1) Identifizieren eines mehrdimensionalen Modulationssymbols von besagtem Satz aller möglichen mehrdimensionalen Modulationssymbole;
a2) Rotation besagten identifizierten mehrdimensionalen Modulationssymbols durch N ganzzahlige Vielfache von 360°/N, wobei besagte ganzzahlige Vielfache i 360°/N, i=0, ... N-1 sind, dabei auswählend N mehrdimensionale Modulationssymbole von besagtem Untersatz, SM; und
a3) Iterieren besagter Schritt a1) und a2), bis M' mehrdimensionale Modulationssymbole ausgewählt sind.

5. Verfahren nach Anspruch 4, wobei besagter Schritt a) weiterhin umfasst das Teilen besagten Untersatzes, SM, von M' ausgewählten mehrdimensionalen Modulationssymbonen in N nicht überlappende Gruppen, Si, i=0, ... N-1.

6. Verfahren nach Anspruch 5, wobei besagtes Teilen umfasst das Einführen eines jeden besagter N mehrdimensionaler Modulationssymbole, die in Schritt a2) ausgewählt worden sind, in eine entsprechende der besagten N nicht überlappenden Gruppen, Si, i=0, ... N-1.

7. Verfahren nach Anspruch 5 oder 6, wobei besagter Schritt a) umfasst das Zuweisen differentieller Etiketten von n Bits zu Transitionen zwischen besagten N nicht überlappenden Gruppen, Si, i=0, ... N-1, besagter differentieller Etiketten unter Ermöglichen der differentiellen Codierung von n Bits eines jeden Musters von m' Bits.

8. Verfahren nach einem beliebigen der Ansprüche 4 bis 7, wobei besagter Schritt a) umfasst das Zuweisen eines selben rotatorisch invarianten Etiketts von m'-n Bits zu besagten N mehrdimensionalen Modulationssymbolen, die in Schritt a2) erhalten worden sind aus der Rotation besagten identifizierten mehrdimensionalen Modulationssymbols, wobei das rotatorisch invariante Etikett es ermöglicht, besagte restliche m'-n Bits eines jeden Musters von m' Bits in einer rotatorisch invarianten Weise zu codieren.

9. Verfahren nach Anspruch 7, wobei besagte differentielle Codierung besagter n Bits umfasst das Abbilden besagter n Bits in eine Transition zwischen besagten N nicht überlappenden Gruppen, Si, i=0, ... N-1, deren zugewiesenes differentielles Etikett zu n besagten n Bits passt, auf Grundlage auch einer Kenntnis der Gruppe, Si, verwendet für das Abbilden des vorhergehenden Musters von m' Bits, Bestimmen, aus besagten N nicht überlappenden Gruppen, Si, i=0, ... N-1, einer Gruppe, Si*, die verwendet werden soll für das Abbilden besagter verbleibender m'-n Bits in einer rotatorisch invarianten Weise.

10. Verfahren nach Anspruch 8 oder 9, wobei besagtes Codieren besagter restlicher m'-n Bits in einer rotatorisch invarianten Weise umfasst das Abbilden besagter restlicher m'-n Bits in das mehrdimensionale Modulationssymbol besagter bestimmter Gruppe, Si*, deren zugewiesenes rotatorisch invariantes Etikett zu besagten restlichen m'-n Bits passt.

11. Verfahren nach Anspruch 10, wobei besagter Schritt b) umfasst das Anwenden mindestens eines analogen Signals einer Phase und/oder einer Amplitude, das verbunden ist mit besagtem mehrdimensionalen Modulationssymbol, dessen zugewiesenes rotatorisch invariantes Etikett zu besagten restlichen m'-n Bits passt.

12. Sender (TX) für ein digitales Kommunikationsnetzwerk,
wobei besagter Sender (TX) konfiguriert ist zum Codieren von Mustern von m' Bits digitaler Daten, die in mehrdimensionalen Modulationssymbolen einer mehrdimensionalen Konstellation übertragen werden müssen,
wobei besagte mehrdimensionale Konstellation erzeugt beginnend von mindestens zwei zweidimensionalen Konstellationen, die eine N-fache Rotationssymmetrie aufweisen, wobei besagte mehrdimensionale Konstellation gebildet wird durch eine Anzahl M'=2^{m'} von mehrdimensionalen Modulationssymbolen, wobei jedes mehrdimensionale Modulationssymbol von besagter mehrdimensionaler Konstellation beim Drehen um ein beliebiges ganzzahliges Vielfaches von 360°/N zu einem weiteren mehrdimensionalen Modulationssymbol von besagter mehrdimensionaler Konstellation führt, und
wobei besagter Sender (TX) konfiguriert ist zum:
• differentiellen Codieren von n=log₂(N) Bits aus besagten m' Bits von jedem Muster, sodass die Anzahl von differentiell codierten Bits pro zweidimensionalem Symbol n/2 ist, und
• Codieren der restlichen m'-n Bits aus besagten m' Bits von jedem Muster, sodass dasselbe rotatorisch invariante Etikett von m'- n Bits allen mehrdimensionalen Modulationssymbolen zugewiesen wird, die erhalten werden durch Rotation eines selben mehrdimensionalen Modulationssymbols durch ein beliebiges Vielfaches von 360°/N.

13. Kommunikationsnetzwerk, umfassend einen Sender nach Anspruch 12.

## Revendications

1. Procédé pour moduler numériquement un signal dans un réseau de communication, ledit procédé comprenant les étapes suivantes :
a) générer une constellation multidimensionnelle à partir d'au moins deux constellations bidimensionnelles avec une symétrie rotationnelle de N-pli, ladite constellation multidimensionnelle étant formée par un nombre M' de symboles de modulation multidimensionnels, chaque symbole de modulation multidimensionnel de ladite constellation multidimensionnelle, lorsqu'il est fait tourner par un quelconque multiple entier de 360°/N, aboutissant à un autre symbole de modulation multidimensionnel de ladite constellation multidimensionnelle ; et
b) encoder des motifs de m'=log₂(M') bits de données numériques à transmettre dans lesdits symboles de modulation multidimensionnels de ladite constellation multidimensionnelle,
**caractérisé en ce que** ledit encodage comprend les étapes suivantes :
• encoder différentiellement n=log₂(N) bits desdits m' bits de chaque motif, de sorte que le nombre de bits encodés différentiellement par symbole bidimensionnel soit n/2, et
• encoder m'-n bits restants desdits m' bits de chaque motif, de sorte que la même étiquette invariante rotationnellement de m'-n bits soit assignée à tous les symboles de modulation multidimensionnels obtenus en faisant tourner un même symbole de modulation multidimensionnel par un quelconque multiple entier de 360°/N.

2. Procédé selon la revendication 1, dans lequel ledit nombre M' est une puissance de 2.

3. Procédé selon l'une quelconque des revendications précédentes, dans lequel ladite étape a) comprend l'identification d'un sous-ensemble, SM, formé par ledit nombre M' de symboles de modulation multidimensionnels en appliquant une technique de partitionnement d'ensemble à un ensemble de tous les symboles de modulation multidimensionnels possibles pouvant être obtenus en combinant des symboles de modulation bidimensionnels desdites au moins deux constellations bidimensionnelles.

4. Procédé selon la revendication 3, dans lequel ladite technique de partitionnement d'ensemble comprend les étapes suivantes :
a1) identifier un symbole de modulation multidimensionnel à partir dudit ensemble de tous les symboles de modulation multidimensionnels possibles ;
a2) faire tourner ledit symbole de modulation multidimensionnel identifié par N multiples entiers de 360°/N, lesdits multiples entiers étant i.360°/N, i=0, ... N-1, sélectionnant ainsi N symboles de modulation multidimensionnels dudit sous-ensemble, SM ; et
a3) itérer lesdites étapes a1) et a2) jusqu'à ce que M' symboles de modulation multidimensionnels soient sélectionnés.

5. Procédé selon la revendication 4, dans lequel ladite étape a) comprend en outre la division dudit sous-ensemble, SM, de M' symboles de modulation multidimensionnels sélectionnés en N groupes non chevauchants, Si, i=0, ... N-1.

6. Procédé selon la revendication 5, dans lequel ladite division comprend l'insertion de chacun desdits N symboles de modulation multidimensionnels sélectionnés à l'étape a2) en un groupe respectif desdits N groupes non chevauchants, Si, i=0, ... N-1.

7. Procédé selon la revendication 5 ou 6, dans lequel ladite étape a) comprend l'assignation d'étiquettes différentielles de n bits à des transitions entre lesdits N groupes non chevauchants, Si, i=0, ... N-1, lesdites étiquettes différentielles permettant d'encoder différentiellement n bits de chaque motif de m' bits.

8. Procédé selon l'une quelconque des revendications 4 à 7, dans lequel ladite étape a) comprend l'assignation d'une même étiquette invariante rotationnellement de m'-n bits auxdits N symboles de modulation multidimensionnels obtenus à l'étape a2) à partir de la rotation dudit symbole de modulation multidimensionnel identifié, ladite étiquette invariante rotationnellement permettant d'encoder lesdits m'-n bits restants de chaque motif de m' bits de façon invariante rotationnellement.

9. Procédé selon la revendication 7, dans lequel ledit encodage différentiel desdits n bits comprend le mappage desdits n bits dans une transition entre lesdits N groupes non chevauchants, Si, i=0, ... N-1, dont l'étiquette différentielle assignée correspond auxdits n bits et, sur la base également d'une connaissance du groupe, Si, utilisé pour mapper le motif précédent de m' bits, la détermination, parmi lesdits N groupes non chevauchants, Si, i=0, ... N-1, d'un groupe, Si*, qui doit être utilisé pour mapper lesdits m'-n bits restants de façon invariante rotationnellement.

10. Procédé selon la revendication 8 et 9, dans lequel ledit encodage desdits m'-n-bits restants de façon invariante rotationnellement comprend le mappage desdits m'-n bits restants dans le symbole de modulation multidimensionnel dudit groupe déterminé, Si*, dont l'étiquette invariante rotationnellement assignée correspond auxdits m'-n bits restants.

11. Procédé selon la revendication 10, dans lequel ladite étape b) comprend l'application à au moins un signal analogique d'une phase et/ou d'une amplitude associée audit symbole de modulation multidimensionnel dont l'étiquette invariante rotationnellement assignée correspond auxdits m'-n bits restants.

12. Émetteur (TX) pour un réseau de communication numérique,
ledit émetteur (TX) étant configuré pour encoder des motifs de m' bits de données numériques à transmettre dans des symboles de modulation multidimensionnels d'une constellation multidimensionnelle,
ladite constellation multidimensionnelle étant générée à partir d'au moins deux constellations bidimensionnelles avec une symétrie rotationnelle de N-pli, ladite constellation multidimensionnelle étant formée par un nombre M'=2^{m'} de symboles de modulation multidimensionnels, chaque symbole de modulation multidimensionnel de ladite constellation multidimensionnelle, lorsqu'il est fait tourner par un quelconque multiple entier de 360°/N, aboutissant à un autre symbole de modulation multidimensionnel de ladite constellation multidimensionnelle, et
ledit émetteur (TX) étant configuré pour :
• encoder différentiellement n=log₂(N) bits desdits m' bits de chaque motif, de sorte que le nombre de bits encodés différentiellement par symbole bidimensionnel soit n/2, et
• encoder m'-n bits restants desdits m' bits de chaque motif, de sorte que la même étiquette invariante rotationnellement de m'-n bits soit assignée à tous les symboles de modulation multidimensionnels obtenus en faisant tourner un même symbole de modulation multidimensionnel par un quelconque multiple entier de 360°/N.

13. Réseau de communication comprenant un émetteur selon la revendication 12.
